# EUROPEAN PATENT APPLICATION

(11) **EP 4 701 235 A1**
(43) Date of publication of application: **25.02.2026**
(21) Application number: 24844247.7
(22) Date of filing: 20.03.2024
(51) Int. Cl.: H04R 9/06

(54) **ACOUSTIC CAVITY STRUCTURE AND MANUFACTURING METHOD THEREFOR, AND ELECTRONIC DEVICE**

(30) Priority: 27.07.2023 CN 202310939812
(71) Applicant: Honor Device Co., Ltd., Shenzhen, Guangdong 518040 (CN)
(72) Inventor: ZHOU, Hong, Shenzhen, Guangdong 518040 (CN); DI, Xijian, Shenzhen, Guangdong 518040 (CN); WANG, Yuan, Shenzhen, Guangdong 518040 (CN)
(74) Representative: Gill Jennings & Every LLP
(86) International application number: PCT/CN2024/082694
(87) International publication number: WO 2025/020550

(57) **Abstract**

This application discloses a sound chamber structure, a fabrication method thereof, and an electronic device. The sound chamber structure includes a middle frame assembly, a screen assembly, and a speaker. The middle frame assembly includes a middle frame and a sealing dustproof member. The middle frame includes a first through hole. The sealing dustproof member includes a second through hole. The sealing dustproof member is attached to a second surface of the middle frame and covers the first through hole, and the first through hole and the second through hole are in communication. The screen assembly is attached to a first surface of the middle frame, and the speaker is attached to the sealing dustproof member. The speaker includes an open chamber facing the first through hole, and the open chamber, the second through hole, the first through hole, and the screen assembly enclose an equivalent sound chamber of the speaker. By using the speaker having the open chamber, a thickness of the sound chamber structure can be reduced. In this way, a working chamber of an equal or higher volume may be provided for the speaker by using the equivalent sound chamber while implementing thinning and light-weighting of the electronic device. The sound chamber structure may be effectively sealed, so that the electronic device can be effectively waterproof, and audio performance of the speaker can be further ensured.

## Description

This application claims priority to Chinese Patent Application No. 202310939812.1, filed on July 27, 2023 and entitled "SOUND CHAMBER STRUCTURE, FABRICATION METHOD THEREOF, AND ELECTRONIC DEVICE", which is incorporated herein by reference in its entirety.

### TECHNICAL FIELD

This application relates to the field of terminal device technologies, and in particular, to a sound chamber structure, a fabrication method thereof, and an electronic device.

### BACKGROUND

A speaker is disposed in an electronic device, so that the electronic device has a sound playback function. The speaker includes a housing and a speaker kernel accommodated in the housing. The speaker kernel and the housing form a front chamber and a rear chamber, and the front chamber is in communication with a sound outlet. The speaker is usually disposed on a middle frame of the electronic device. To implement a good sound playback function, the front chamber needs to be sealed, and a sealing rubber ring is used to be tightly compressed with the middle frame at the sound outlet to implement plane sealing. In this way, external liquid may be prevented from entering the electronic device from the sound outlet, to prevent a circuit board on the middle frame from being affected.

With thinning and light-weighting development of the electronic device, the speaker also needs to be thinned gradually. However, thinning of the speaker reduces volumes of the front chamber and the rear chamber, and reduces audio performance of the speaker. To implement a thinning and light-weighting requirement and ensure the audio performance, a speaker having an open chamber (hereinafter referred to as an open speaker) may be used, and the open chamber may be formed in the front chamber, or may be formed in the rear chamber.

However, taking the open chamber formed in the front chamber as an example, a sound outlet of the open speaker is connected to the open chamber, so that sealing may no longer be performed by tightly compressing the sealing rubber ring with the middle frame. It can be learned that a conventional sealing method cannot meet a sealing requirement of the electronic device including the open speaker. However, poor sealing of the open speaker may cause an abnormality in the audio performance and a waterproof failure risk.

### SUMMARY

This application provides a sound chamber structure, a fabrication method thereof, and an electronic device, so as to solve a problem that a sealing effect is poor by using an electronic device that uses a speaker having an open chamber.

According to a first aspect, this application provides a sound chamber structure, including: a middle frame assembly, including a middle frame and a sealing dustproof member; where the middle frame includes a first surface, a second surface, and a first through hole in communication with the first surface and the second surface; the first surface and the second surface are opposite surfaces; the sealing dustproof member is attached to the second surface and covers the first through hole, the sealing dustproof member includes a second through hole, and the second through hole is in communication with the first through hole; a screen assembly and a speaker, where the screen assembly is attached to the first surface, and the speaker is attached to the sealing dustproof member; and the speaker includes an open chamber facing the first through hole, and the open chamber, the second through hole, the first through hole, and the screen assembly enclose an equivalent sound chamber of the speaker.

The sound chamber structure provided in embodiments of this application uses the speaker having the open chamber, and a thickness of the speaker may be reduced, so that a thickness of the sound chamber structure is reduced, and then thinning and light-weighting of the electronic device may be implemented. In addition, the screen assembly is attached to the middle frame assembly to form a front housing assembly, so as to implement sealing between the middle frame and the screen assembly. Then, the speaker having the open chamber is attached to the middle frame assembly, and sealing between the speaker and the middle frame is implemented by using the sealing dustproof member. It can be learned that the sound chamber structure uses the screen assembly and the middle frame assembly to enclose the equivalent sound chamber of the open speaker, so that a working chamber of an equal or higher volume may be provided for the speaker while implementing thinning and light-weighting of the electronic device. In this way, the sound chamber structure may be effectively sealed, so that the electronic device can be effectively waterproof, and audio performance of the speaker may be further ensured.

In some implementations, the middle frame includes a middle plate and a side frame enclosing an edge of the middle plate, and the first through hole is formed in the middle plate. One side of the side frame facing the first through hole includes a sound guide sidewall, and the sound guide sidewall is connected to the middle plate based on a first angle. The middle frame further includes a plurality of sound guide holes that run through the side frame and the sound guide sidewall, and the sound guide holes are in communication with the equivalent sound chamber. In this way, a sound outlet channel may be formed between the sound guide hole and the equivalent sound chamber, so as to improve the audio performance of the speaker.

In some implementations, the sealing dustproof member includes a base sheet and a dustproof sheet, and the base sheet and the dustproof sheet are connected based on a second angle. The second angle is equal to the first angle. The base sheet is attached to the middle plate, and the dustproof sheet is attached to the sound guide sidewall. A center of the base sheet includes the second through hole. In this way, a housing structure of the speaker may be adapted, so that the speaker can be seamlessly attached to the sealing dustproof member, and a sealing effect is improved.

In some implementations, the sealing dustproof member includes a substrate, a dust filter, and a first adhesive layer that are stacked. A region that is of the substrate and used to form the base sheet includes a first hollowed-out hole, and a region that is of the substrate and used to form the dustproof sheet includes a second hollowed-out hole. A region that is of the dust filter and used to form the base sheet includes a third hollowed-out hole. A region that is of the first adhesive layer and used to form the base sheet includes a fourth hollowed-out hole, and a region that is of the first adhesive layer and used to form the dustproof sheet includes a fifth hollowed-out hole. The first hollowed-out hole, the third hollowed-out hole, and the fourth hollowed-out hole are in communication, to form the second through hole. The second hollowed-out hole and the fifth hollowed-out hole are in communication, so as to expose a region that is of the dust filter and used to form the dustproof sheet. In this way, the sealing dustproof member may not only form the equivalent sound chamber subsequently, but also may have a dustproof role.

In some implementations, the speaker includes a kernel and a housing that forms openings on two adjacent side surfaces. The kernel is located in the housing, and has a first distance L1 from an open end edge of the housing, so as to enclose the open chamber. In this way, a part of the housing used to form the open chamber may be canceled, so as to reduce the thickness of the speaker.

In some implementations, the open end edge of the housing includes an annular wire slot. A surface of the substrate includes a first sealing rib, and the first sealing rib is continuously formed in a region of adjacent edges of the base sheet and the dustproof sheet. The first sealing rib is configured to be embedded into the annular wire slot to abut against the open end edge of the housing. In this way, sealing between the speaker and the sealing dustproof member may be implemented, and the sealing effect is improved.

In some implementations, the sound chamber structure further includes a second adhesive layer. The second adhesive layer continuously covers a peripheral edge of the first surface and an edge of the first through hole. The second adhesive layer is configured to implement attachment between the screen assembly and the first surface, and is configured to seal one end of the first through hole facing the first surface. In this way, a binding force between the screen assembly and the middle frame may be improved, and a good sealing effect may be further obtained.

In some implementations, the sealing dustproof member further includes a third adhesive layer. The third adhesive layer is located between the substrate and the dust filter. A region that is of the third adhesive layer and used to form the base sheet includes a sixth hollowed-out hole, and a region that is of the third adhesive layer and used to form the dustproof sheet includes a seventh hollowed-out hole. The sixth hollowed-out hole is configured to form the second through hole, and the seventh hollowed-out hole is configured to expose a region that is of the dust filter and used to form the dustproof sheet. In this way, the substrate and the dust filter are combined by using the third adhesive layer, so that costs can be reduced.

In some implementations, the speaker further includes a second sealing rib, and the second sealing rib is continuously formed on the open end edge of the housing. The second sealing rib is configured to abut against the substrate. In this way, sealing between the speaker and the sealing dustproof member may be implemented, and the sealing effect is improved.

In some implementations, the sealing dustproof member further includes a support. The support is located in the second through hole, and is configured to support the sealing dustproof member. The support is configured to be removed after the sealing dustproof member is attached to the second surface. In this way, the support may be used to provide hardness for the sealing dustproof member, so that the sealing dustproof member is conveniently installed on the middle frame.

According to a second aspect, this application provides a fabrication method of a sound chamber structure, used to fabricate the sound chamber structure provided in the first aspect. The method includes: providing a middle frame assembly, a screen assembly, and a speaker, where the middle frame assembly includes a middle frame and a sealing dustproof member, and the middle frame includes a first surface, a second surface, and a first through hole in communication with the first surface and the second surface; the first surface and the second surface are opposite surfaces; attaching the sealing dustproof member to the second surface and covering the first through hole, where the sealing dustproof member includes a second through hole, and the second through hole is in communication with the first through hole; attaching the screen assembly to the first surface of the middle frame; and attaching the speaker to the sealing dustproof member; where the speaker includes an open chamber facing the first through hole, and the open chamber, the second through hole, the first through hole, and the screen assembly enclose an equivalent sound chamber of the speaker.

According to the fabrication method of the sound chamber structure provided in the embodiments of this application, the screen assembly is attached to the middle frame assembly, and a front housing assembly may be formed, so as to implement sealing between the middle frame and the screen assembly. Then, the speaker having the open chamber is attached to the middle frame assembly, and sealing between the speaker and the middle frame is implemented by using the sealing dustproof member. It can be learned that the sound chamber structure fabricated by the method may use the screen assembly and the middle frame assembly to enclose the equivalent sound chamber of the open speaker, so that a working chamber of an equal or higher volume may be provided for the speaker while implementing thinning and light-weighting of the electronic device. In this way, the sound chamber structure may be effectively sealed, so that the electronic device can be effectively waterproof, and audio performance of the speaker may be further ensured.

In some implementations, the method further includes: machining a sound guide sidewall on a side frame of the middle frame; where the sound guide sidewall is connected to a middle plate of the middle frame based on a first angle; and machining, in a stacked structure of the side frame and the sound guide sidewall, a plurality of sound guide holes that run through the side frame and the sound guide sidewall, where the sound guide holes are in communication with the equivalent sound chamber. In this way, a sound outlet channel may be formed between the sound guide hole and the equivalent sound chamber, so as to improve the audio performance of the speaker.

In some implementations, fabricating the sealing dustproof member includes the following steps: providing a substrate, a dust filter and a first adhesive layer; integrally molding the substrate and the dust filter to obtain an assembly; applying an external force in a preset region of the assembly, so that the assembly is deformed; and attaching the first adhesive layer to a surface of the dust filter away from the substrate to obtain the sealing dustproof member; where the sealing dustproof member includes a base sheet and a dustproof sheet, a second angle exists between the base sheet and the dustproof sheet, and the second angle is equal to the first angle. In this way, a housing structure of the speaker may be adapted, so that the speaker can be seamlessly attached to the sealing dustproof member, and a sealing effect is improved.

In some implementations, the attaching the sealing dustproof member to the second surface and covering the first through hole includes: attaching the base sheet of the sealing dustproof member to the middle plate by using the first adhesive layer, and attaching the dustproof sheet of the sealing dustproof member to the sound guide sidewall. In this way, a seamless attachment effect between the sealing dustproof member and the middle frame may be improved.

In some implementations, the attaching the screen assembly to the first surface of the middle frame includes: coating a second adhesive layer on a peripheral edge of the first surface and an edge of the first through hole; and attaching the screen assembly to the first surface of the middle frame by using the second adhesive layer. In this way, a binding force between the screen assembly and the middle frame may be improved, and a good sealing effect may be further obtained.

In some implementations, the attaching the speaker to the sealing dustproof member includes: machining an annular wire slot on an open end edge of the housing of the speaker, and injecting a first sealing rib on a surface of the substrate, where the first sealing rib is continuously formed in a region of adjacent edges of the base sheet and the dustproof sheet; and buckling the speaker onto the sealing dustproof member, fastening the speaker to the second surface of the middle frame, and embedding the first sealing rib into the annular wire slot, so that the open end edge of the housing of the speaker abuts against the first sealing rib. In this way, sealing between the speaker and the sealing dustproof member can be implemented, and the sealing effect is improved.

In some implementations, the fabricating the sealing dustproof member further includes: attaching a third adhesive layer between the substrate and the dust filter. In this way, the substrate and the dust filter are combined by using the third adhesive layer, so that costs can be reduced.

In some implementations, the attaching the speaker to the sealing dustproof member includes: injecting a second sealing rib in the open end edge of the housing of the speaker; and buckling the speaker onto the sealing dustproof member, fastening the speaker to the second surface of the middle frame, and making the substrate abut against the second sealing rib. In this way, sealing between the speaker and the sealing dustproof member may be implemented, and the sealing effect is improved.

In some implementations, the fabricating the sealing dustproof member further includes: injecting a support in the second through hole, where the support is configured to support the sealing dustproof member. After the sealing dustproof member is attached to the second surface and covering the first through hole, the method further includes removing the support in the sealing dustproof member. In this way, the support may be used to provide hardness for the sealing dustproof member, so that the sealing dustproof member is conveniently installed on the middle frame.

According to a third aspect, this application provides an electronic device, including a sound chamber structure according to the first aspect.

### BRIEF DESCRIPTION OF DRAWINGS

To describe technical solutions of this application more clearly, the following briefly describes accompanying drawings required in embodiments. Apparently, a person of ordinary skill in the art may still derive other accompanying drawings from these accompanying drawings without creative efforts.
FIG. 1 is a schematic structural diagram of an electronic device 100;
FIG. 2 is a local schematic diagram of a cross section A-A in FIG. 1;
FIG. 3 is a schematic structural diagram of a speaker assembly 40;
FIG. 4 is a first schematic structural diagram of a speaker 401 according to an embodiment of this application;
FIG. 5 is a first schematic structural diagram of a sound chamber structure 50 according to an embodiment of this application;
FIG. 6 is a second schematic structural diagram of a sound chamber structure 50 according to an embodiment of this application;
FIG. 7 is a third schematic structural diagram of a sound chamber structure 50 according to an embodiment of this application;
FIG. 8 is a first schematic structural diagram of a middle frame 101 according to an embodiment of this application;
FIG. 9 is a second schematic structural diagram of a middle frame 101 according to an embodiment of this application;
FIG. 10 is a schematic structural diagram of a middle frame assembly according to an embodiment of this application;
FIG. 11 is a first local schematic diagram of a cross section B-B in FIG. 6;
FIG. 12 is an enlarged view of a region C in FIG. 8;
FIG. 13 is a side view of a speaker 401 according to an embodiment of this application;
FIG. 14 is a schematic structural diagram of a sound guide sidewall 105 and a middle plate 103 according to an embodiment of this application;
FIG. 15 is a first schematic structural diagram of a sealing dustproof member 201 according to an embodiment of this application;
FIG. 16 is a schematic diagram of a first exploded structure of a sealing dustproof member 201 according to an embodiment of this application;
FIG. 17 is a schematic diagram of a second exploded structure of a sealing dustproof member 201 according to an embodiment of this application;
FIG. 18 is a second local schematic diagram of a cross section B-B in FIG. 6;
FIG. 19 is an enlarged view of a region D in FIG. 11;
FIG. 20 is a third schematic structural diagram of a middle frame 101 according to an embodiment of this application;
FIG. 21 is a second schematic structural diagram of a speaker 401 according to an embodiment of this application;
FIG. 22 is a second schematic structural diagram of a sealing dustproof member 201 according to an embodiment of this application;
FIG. 23 is a third schematic structural diagram of a sealing dustproof member 201 according to an embodiment of this application;
FIG. 24 is a flowchart of a fabrication method of a sound chamber structure according to an embodiment of this application;
FIG. 25 is a schematic diagram of a technological process for fabricating a sealing dustproof member according to an embodiment of this application;
FIG. 26 is a schematic diagram of a technological process for fabricating a middle frame assembly according to an embodiment of this application;
FIG. 27 is a schematic diagram of a first technological process for fabricating a sound chamber structure 50 according to an embodiment of this application; and
FIG. 28 is a schematic diagram of a second technological process for fabricating a sound chamber structure 50 according to an embodiment of this application.

### DESCRIPTION OF EMBODIMENTS

The following clearly describes the technical solutions in the embodiments of this application with reference to the accompanying drawings in the embodiments of this application. It is clear that the described embodiments are some but not all of the embodiments of this application. Other embodiments obtained by a person of ordinary skill in the art based on the embodiments of this application without creative efforts shall fall within the protection scope of this application.

The terms "first" and "second" below are merely intended for a purpose of description, and shall not be understood as an indication or implication of relative importance or implicit indication of a quantity of indicated technical features. Therefore, a feature defined by "first", "second", and the like may explicitly or implicitly include one or more such features. In the descriptions of this application, unless otherwise stated, "a plurality of" means two or more.

In addition, in this application, orientation terms such as "upper" and "lower" are defined relative to the orientations in which components in the accompanying drawings are schematically placed. It should be understood that these orientation terms are relative concepts, are used for relative description and clarification, and may be correspondingly changed based on changes in the orientations in which the components are placed in the accompanying drawings.

In the embodiments of this application, the electronic device includes but is not limited to a mobile phone, a foldable mobile phone, a notebook computer, a pad, a laptop computer, a personal digital assistant or a wearable device. Description is provided below by using an example in which the electronic device is a mobile phone.

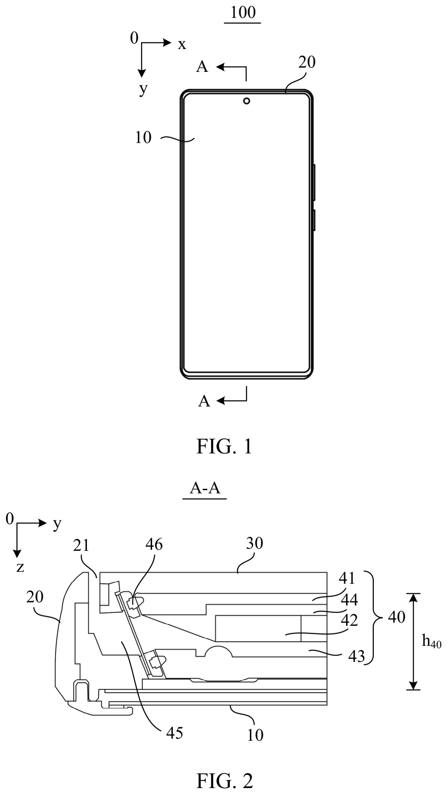

FIG. 1 is a schematic structural diagram of an electronic device 100. FIG. 2 is a local schematic diagram of a cross section A-A in FIG. 1.

As shown in FIG. 1 and FIG. 2, the electronic device 100 may include a screen 10, a body 20, and a rear housing 30. The screen 10, the body 20, and the rear housing 30 are successively buckled together. A speaker assembly 40 is disposed on the body 20, so that the electronic device has a sound playback function.

The speaker assembly 40 is an element that converts an electrical signal into a sound signal for playing. The speaker assembly 40 may include a diaphragm, a voice coil, a permanent magnet, a support, and the like.

An operating principle of the speaker assembly 40 may include that the electronic device 100 sends an electrical signal, such as an audio signal, to the voice coil of the speaker assembly 40. After the electrical signal is introduced to the voice coil of the speaker assembly 40, the voice coil generates an alternating magnetic field under the action of the electrical signal, and the permanent magnet also simultaneously generates a constant magnetic field with a constant size and a constant direction. Because the size and the direction of the magnetic field generated by the voice coil continuously change with a change of the electrical signal, interaction between the two magnetic fields causes the voice coil to move in a direction perpendicular to an electric signal transmission direction in the voice coil. Because the voice coil and the diaphragm are connected, the diaphragm is driven to vibrate, and air vibration is caused by the diaphragm to make a sound.

It should be noted that the electronic device 100 may further include devices such as a circuit board, a battery, and a camera assembly, which are not listed herein.

For ease of description of positions of components in the electronic device 100, an exemplary embodiment of this application establishes a three-dimensional coordinate system based on the electronic device 100, where an x-axis direction is a width direction of the electronic device 100, a y-axis direction is a length direction of the electronic device 100, and a z-axis direction is a thickness direction of the electronic device 100.

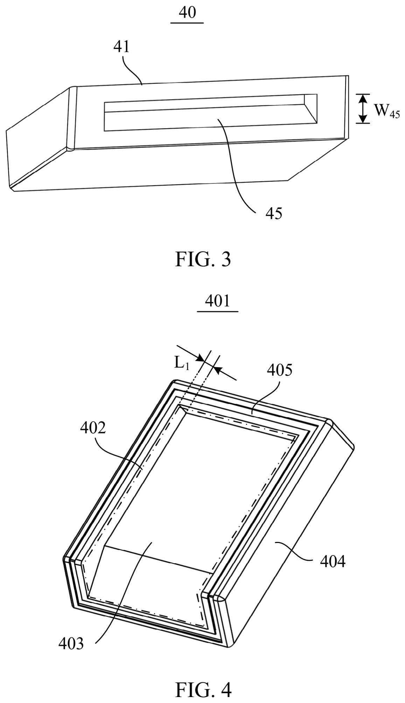

FIG. 3 is a schematic structural diagram of a speaker assembly 40.

With reference to FIG. 2 and FIG. 3, the speaker assembly 40 is a closed structure. The speaker assembly 40 includes a housing 41 and a speaker kernel 42 accommodated in the housing 41. The speaker kernel 42 is a core component configured to form an outgoing sound, and the speaker kernel 42 includes a diaphragm configured to vibrate and sound. The housing 41 is configured to provide a sound chamber for the speaker kernel 42 to implement corresponding acoustic performance.

The speaker kernel 42 and the housing 41 form a front chamber 43 and a rear chamber 44. The front chamber 43 faces the screen 10, and the rear chamber 44 faces the rear housing 30. The rear chamber 44 is a closed chamber to avoid sound leakage. A sound outlet 45 is disposed in a region that is of the housing 41 and corresponding to the front chamber 43, and the sound outlet 45 is in communication with the front chamber 43, but is not in communication with the rear chamber 44. Correspondingly, a sound outlet hole 21 is disposed on the body 20, and the sound outlet hole 21 is in communication with the sound outlet 45 to form a sound outlet channel. In this way, when the speaker kernel 42 works, air in the front chamber 43 may be pushed to vibrate, and air vibrated in the front chamber 43 is exported from the sound outlet channel to form a sound.

To implement a good sound playback function, the front chamber 43 needs to be sealed, and a sealing rubber ring 46 is used to be tightly compressed with the body 20 at the sound outlet 45 to implement plane sealing. In this way, external liquid may be prevented from entering the electronic device from the sound outlet hole 21 and the sound outlet 45 successively, which affects a circuit board on the body 20.

Because of the presence of the front chamber 43 and the rear chamber 44, the speaker assembly 40 has a specific thickness h40. In this way, the speaker assembly 40 may occupy internal space of the electronic device, and then causes a thickness of the electronic device to increase, so that it is difficult to implement thinning and light-weighting of the electronic device.

To implement the thinning and light-weighting of the electronic device, the speaker assembly 40 may be thinned. However, thinning of the speaker assembly 40 causes volumes of the front chamber and the rear chamber to decrease, thereby reducing audio performance of the speaker assembly 40. In addition, a width W₄₅of the sound outlet 45 of the closed speaker assembly 40 is smaller, which causes a smaller width of the sound outlet channel, and may also affect audio performance of the speaker.

FIG. 4 is a first schematic structural diagram of a speaker 401 according to an embodiment of this application.

As shown in FIG. 4, in some embodiments, to meet the thinning and light-weighting requirement of the electronic device and improve the audio performance, the embodiments of this application provide a speaker 401. The speaker 401 may include a kernel 403 and a housing 404 that forms openings on two adjacent side surfaces. The kernel 403 is a core component configured to form an outgoing sound, and the kernel 403 includes a diaphragm configured to vibrate and sound. The housing 404 is configured to provide a sound chamber for the kernel 403 to implement corresponding acoustic performance.

The kernel 403 is located in the housing 404, and there is a first distance L1 between an upper surface of the kernel 403 and an open end edge of the housing 404, so that the housing 404 and the kernel 403 enclose an open chamber 402 (a dot dash line region in FIG. 4). A lower surface of the kernel 403 and the housing 404 enclose a closed chamber (not shown in the figure). It should be noted that the "top" and "bottom" described herein are merely based on the state shown in FIG. 4.

The speaker 401 may be a speaker (hereinafter referred to as an open speaker) having an open chamber 402. The open chamber 402 may be formed in a front chamber, or may be formed in a rear chamber. For example, if the open chamber 402 may be formed in the front chamber, the closed chamber enclosed by the lower surface of the kernel 403 and the housing 404 is the rear chamber.

However, an example in which the open chamber 402 is formed in the front chamber is used. In this way, with reference to FIG. 3, the sound outlet hole of the open speaker is connected to the open chamber 402, so that sealing may no longer be performed by tightly compressing a conventional sealing rubber ring with a body 20. It can be learned that a conventional sealing method cannot meet a sealing requirement of the electronic device including the open speaker. However, poor sealing of the open speaker causes an abnormality in the audio performance of the open speaker and a waterproof failure risk when the electronic device is used. The waterproof failure risk includes air and liquid leakage from a contact surface between a housing of the speaker and a middle frame to a motherboard compartment, air and liquid leakage from an inclined surface of the outlet sound hole of the speaker to the motherboard compartment, air and liquid leakage of a digging hole of the outlet sound hole of the speaker, or the like.

To solve the problem, the embodiments of this application provide a sound chamber structure 50 and a fabrication method thereof. A screen assembly and a middle frame assembly of the electronic device 100 enclose an equivalent sound chamber of the open speaker, so that a thickness of the speaker 401 can be reduced, so as to implement thinning and light-weighting of the electronic device. In addition, effective sealing is performed on a connection region of the screen assembly, the middle frame assembly, and the speaker 401, and waterproof sealing of an IPX8 level can be achieved, so that the electronic device can be effectively waterproof. A width of a sound outlet channel may further be increased based on an effective sealing effect, so as to improve audio performance of the speaker 401.

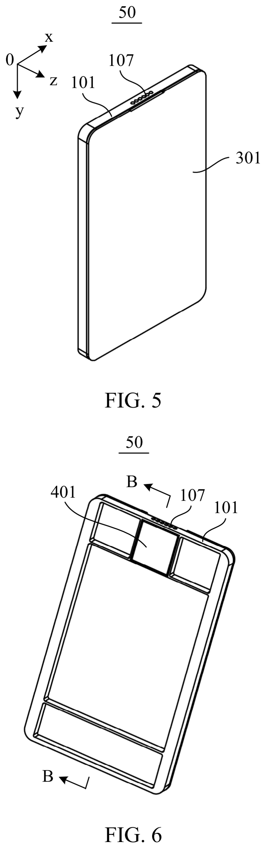

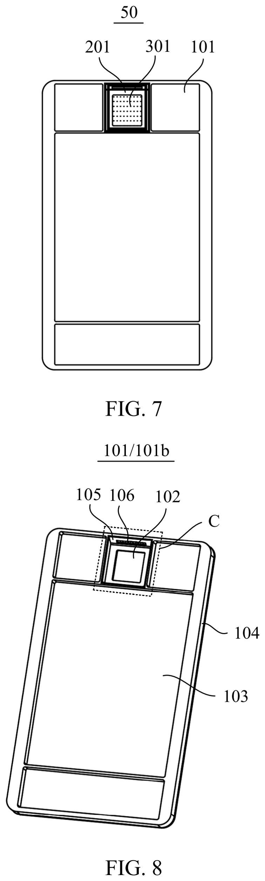

FIG. 5 is a first schematic structural diagram of a sound chamber structure 50 according to an embodiment of this application. FIG. 6 is a second schematic structural diagram of a sound chamber structure 50 according to an embodiment of this application. FIG. 7 is a third schematic structural diagram of a sound chamber structure 50 according to an embodiment of this application. FIG. 5 and FIG. 6 may show schematic structural diagrams of the sound chamber structure 50 from different perspectives. FIG. 7 shows a structure in which the speaker 401 is not shown relative to FIG. 6.

As shown in FIG. 5, FIG. 6, and FIG. 7, in some embodiments, the sound chamber structure 50 may include a middle frame assembly, a screen assembly 301, and a speaker 401. The middle frame assembly may include a middle frame 101 and a sealing dustproof member 201. The middle frame 101 is a large structural member that bears components such as a circuit board and a battery, and is configured to form a body of the sound chamber structure 50. Both the sealing dustproof member 201 and the speaker 401 are installed on the middle frame 101, and are located on one side of the middle frame 101 opposite to the screen assembly 301. The sealing dustproof member 201 is configured to seal and prevent dust on the speaker 401.

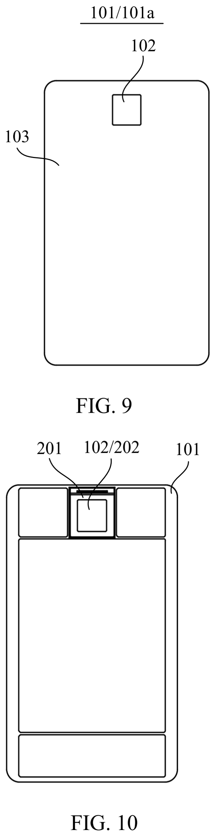

FIG. 8 is a first schematic structural diagram of a middle frame 101 according to an embodiment of this application. FIG. 9 is a second schematic structural diagram of a middle frame 101 according to an embodiment of this application. FIG. 8 and FIG. 9 may show schematic structural diagrams of a middle frame 101 from different perspectives.

As shown in FIG. 8 and FIG. 9, in some embodiments, for ease of description of an internal structure layout of the sound chamber structure 50, a middle frame 101 is defined to include a first surface 101a and a second surface 101b. The first surface 101a is a surface of the middle frame 101 facing the screen assembly 301. The second surface 101b is a surface of the middle frame 101 away from the screen assembly 301. That is, the first surface 101a and the second surface 101b are opposite surfaces.

It should be noted that a circuit board compartment, a battery compartment, and the like may further be disposed on the second surface 101b of the middle frame 101, which are not listed one by one herein.

The middle frame 101 may include a first through hole 102 in communication with the first surface 101a and the second surface 101b, and a region in which the first through hole 102 is located is used to install the sealing dustproof member 201 and the speaker 401, so that an equivalent sound chamber of the speaker 401 is subsequently formed.

A structural shape of the first through hole 102 may be adapted to that of the speaker 401. For example, if the speaker 401 is a square structure, the first through hole 102 is a square structure. If the speaker 401 is a rectangular structure, the first through hole 102 is a rectangular structure.

FIG. 10 is a schematic structural diagram of a middle frame assembly according to an embodiment of this application.

With reference to FIG. 8 and FIG. 10, in some embodiments, the sealing dustproof member 201 is attached to the second surface 101b of the middle frame 101 and covers the first through hole 102. The sealing dustproof member 201 may include a second through hole 202, and the second through hole 202 is in communication with the first through hole 102. For example, structures and sizes of the second through hole 202 and the first through hole 102 are the same, thereby avoiding affecting a volume of the equivalent sound chamber that is subsequently enclosed.

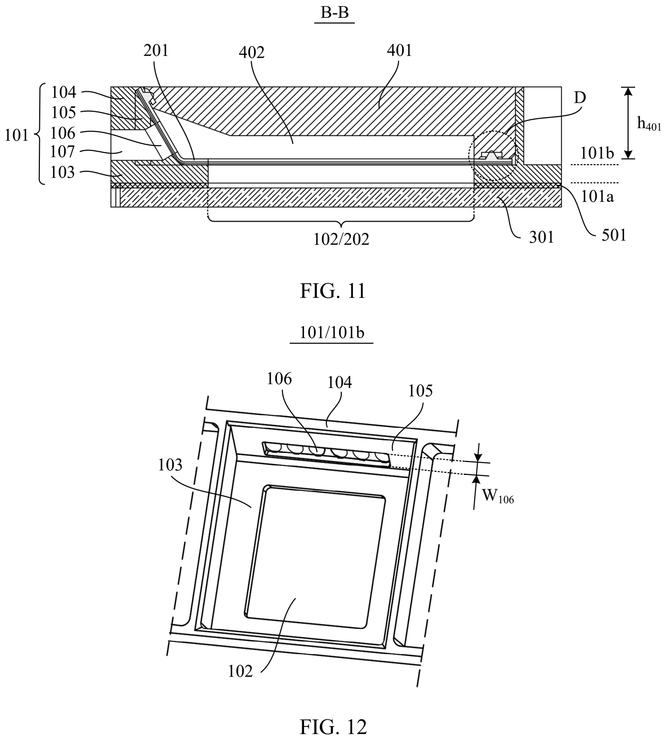

FIG. 11 is a first local schematic diagram of a cross section B-B in FIG. 6.

As shown in FIG. 11, in some embodiments, the screen assembly 301 is attached to the first surface 101a, and is configured to seal one end of the first through hole 102 facing the first surface 101a. The speaker 401 is attached to the sealing dustproof member 201, and is configured to seal one end of the first through hole 102 facing the second surface 101b.

With reference to FIG. 4 again, the speaker 401 includes an open chamber 402 facing the first through hole 102. In this way, the open chamber 402, the second through hole 202, the first through hole 102, and the screen assembly 301 may enclose an equivalent sound chamber of the speaker 401. For example, when the open chamber 402 is formed by the front chamber, the equivalent sound chamber is used as the front chamber of the speaker 401.

According to the sound chamber structure 50 provided in the embodiments of this application, the speaker 401 having the open chamber 402 may be used, so that a wall thickness of the housing 404 that is originally configured to form the front chamber is canceled, so as to reduce a z-directional thickness h₄₀₁of the speaker 401, so that a thickness of the sound chamber structure 50 is reduced, and then thinning and light-weighting of the electronic device can be implemented. For example, the z-directional thickness h₄₀₁of the speaker 401 may be reduced by 0.8 mm, and the reduced thickness includes a wall thickness of the housing 404 and a distance avoiding the screen assembly 301. In addition, the screen assembly 301 is attached to the middle frame assembly to form a front housing assembly, so as to implement sealing between the middle frame 101 and the screen assembly 301. Then, the speaker 401 having the open chamber is attached to the middle frame assembly, and sealing between the speaker 401 and the middle frame 101 is implemented by using the sealing dustproof member 201. It can be learned that the sound chamber structure 50 uses the screen assembly 301 and the middle frame assembly to enclose the equivalent sound chamber of the open speaker 401, so that a working chamber of an equal or higher volume may be provided for the speaker 401 while implementing thinning and light-weighting of the electronic device 100. In this way, the sound chamber structure may be effectively sealed to achieve waterproof sealing of an IPX8 level, so that the electronic device can be effectively waterproof, and audio performance of the speaker 401 can be further ensured.

FIG. 12 is an enlarged view of a region C in FIG. 8.

With reference to FIG. 8, FIG. 11, and FIG. 12, in some embodiments, the middle frame 101 may include a middle plate 103 and a side frame 104 enclosing an edge of the middle plate 103, and the first through hole 102 is formed in the middle plate 103.

One side of the side frame 104 facing the first through hole 102 includes a sound guide sidewall 105. For example, the sound guide sidewall 105 may be located on a top of the side frame 104.

The middle frame 101 further may include a plurality of sound guide holes 106 that run through the side frame 104 and the sound guide sidewall 105, and the sound guide holes 106 are in communication with the equivalent sound chamber. Adaptively, a plurality of sound output holes 107 are disposed on the top of the side frame 104, and a quantity of the sound output holes 107 is the same as that of the sound guide holes 106 in one-to-one correspondence.

The sound outlet hole 107 and the sound guide hole 106 are in communication with the open chamber 402 of the speaker 401 to form a sound outlet channel. In this way, when the kernel 403 of the speaker 401 works, air vibration in the equivalent sound chamber may be pushed, and air vibrated in the equivalent sound chamber is successively exported from the sound guide hole 106 and the sound outlet hole 107 to form a sound.

The speaker 401 may be effectively sealed, so that a width W₁₀₆of the sound guide hole 106 can be increased, and a width W₁₀₆of the sound guide hole 106 is greater than a width W₄₅of the sound outlet 45 of the closed speaker assembly 40 shown in FIG. 3. In this way, the embodiments of this application may increase a width of the sound outlet channel, thereby improving audio performance of the speaker 401.

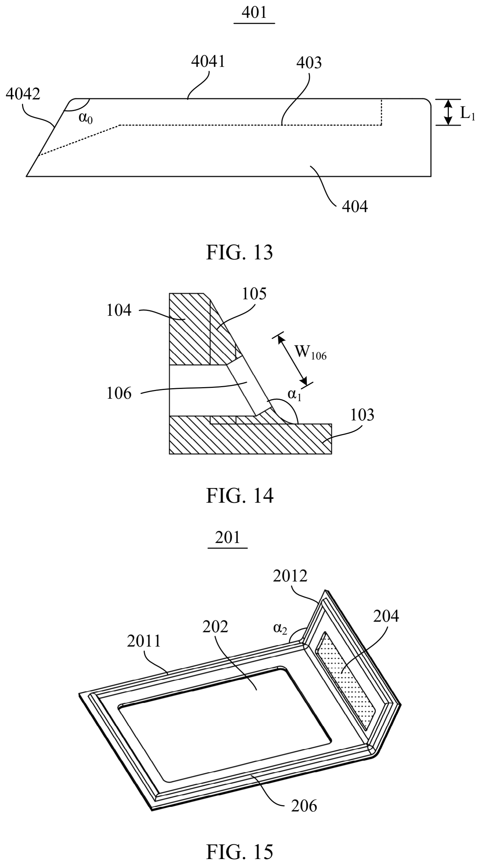

FIG. 13 is a side view of a speaker 401 according to an embodiment of this application.

As shown in FIG. 13, in some embodiments, the housing 404 of the speaker 401 may include a first opening edge 4041 and a second opening edge 4042. The first opening edge 4041, the second opening edge 4042, and a kernel 403 are configured to enclose an open chamber 402. A preset angle α₀exists between the first opening edge 4041 and the second opening edge 4042. For example, the preset angle α₀is a blunt angle.

FIG. 14 is a schematic structural diagram of a sound guide sidewall 105 and a middle plate 103 according to an embodiment of this application.

With reference to FIG. 11, FIG. 13, and FIG. 14, in some embodiments, to adapt a shape of the housing 404, the speaker 401 is seamlessly installed, so that the sound guide sidewall 105 is connected to the middle plate 103 based on a first angle α₁. The first angle α₁is equal to the preset angl₀.

In this way, a contact surface between the housing 404 of the speaker 401 and the sound guide sidewall 105 is an inclined surface. When the speaker 401 is installed on the middle frame 101, the speaker 401 may be better supported by using the sound guide sidewall 105, so as to avoid a tendency of the speaker 401 to slide toward the middle plate 103.

FIG. 15 is a first schematic structural diagram of a sealing dustproof member 201 according to an embodiment of this application.

With reference to FIG. 8 and FIG. 15, in some embodiments, the sealing dustproof member 201 may include a base sheet 2011 and a dustproof sheet 2012. To adapt a structure of the housing 404 and ensure a sealing effect, the base sheet 2011 and the dustproof sheet 2012 are connected based on a second angle α₂. The second angle α₂is equal to the preset angle α₀, and is also equal to the first angle α₁.

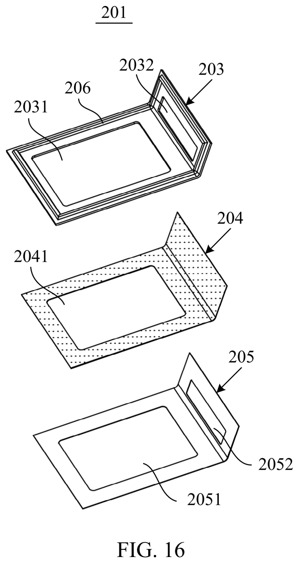

FIG. 16 is a schematic diagram of a first exploded structure of a sealing dustproof member 201 according to an embodiment of this application.

With reference to FIG. 15 and FIG. 16, in some embodiments, the sealing dustproof member 201 may include a substrate 203, a dust filter 204, and a first adhesive layer 205 that are successively stacked. The substrate 203 serves as a skeleton of the sealing dustproof member 201. The dust filter 204 is used to play a dustproof role. The first adhesive layer 205 is used to implement connection between the sealing dustproof member 201 and another structural member.

For example, the substrate 203 may use a soft adhesive such as a soft silicone rubber or rubber, the dust filter 204 may use a steel wire mesh or a weave mesh, and the first adhesive layer 205 may use an adhesive with a stronger adhesive force such as a back adhesive, a hot-melt adhesive, or an ultraviolet rays (Ultraviolet Rays, UV) adhesive.

A region that is of the substrate 203 and used to form a base sheet 2011 includes a first hollowed-out hole 2031, and a region that is of the substrate 203 and used to form a dustproof sheet 2012 includes a second hollowed-out hole 2032. A region that is of the dust filter 204 and used to form the base sheet 2011 includes a third hollowed-out hole 2041. A region that is of the first adhesive layer 205 and used to form the base sheet 2011 includes a fourth hollowed-out hole 2051, and a region that is of the first adhesive layer 205 and used to form the dustproof sheet 2012 includes a fifth hollowed-out hole 2052.

In this way, after the substrate 203, the dust filter 204, and the first adhesive layer 205 are successively stacked together, the first hollowed-out hole 2031, the third hollowed-out hole 2041, and the fourth hollowed-out hole 2051 are corresponding and in communication, so as to form a second through hole 202. The second hollowed-out hole 2032 and the fifth hollowed-out hole 2052 are corresponding and in communication. Because the dust filter 204 is located between the substrate 203 and the first adhesive layer 205, the second hollowed-out hole 2032 and the fifth hollowed-out hole 2052 may be used to expose a region that is of the dust filter 204 and used to form the dustproof sheet 2012.

In some embodiments, the substrate 203 may be integrally molded with the dust filter 204. In this way, the sealing dustproof member 201 is a double-layer structure, which can save z-directional space that occupies the sound chamber structure 50, thereby reducing a z-directional thickness of the sound chamber structure 50, and further reducing a z-directional thickness of the electronic device.

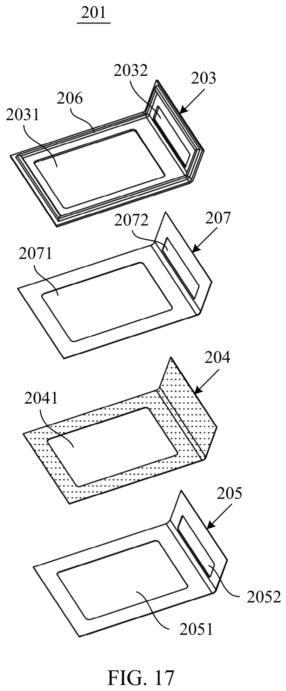

FIG. 17 is a schematic diagram of a second exploded structure of a sealing dustproof member 201 according to an embodiment of this application.

With reference to FIG. 15 and FIG. 17, in some embodiments, the sealing dustproof member 201 may further include a third adhesive layer 207, where the third adhesive layer 207 is located between the substrate 203 and the dust filter 204. In this way, the sealing dustproof member 201 may be successively stacked by the substrate 203, the third adhesive layer 207, the dust filter 204, and the first adhesive layer 205.

A region that is of the third adhesive layer 207 and used to form a base sheet 2011 includes a sixth hollowed-out hole 2071, and a region that is of the third adhesive layer 207 and used to form a dustproof sheet 2012 includes a seventh hollowed-out hole 2072. In this way, the first hollowed-out hole 2031, the sixth hollowed-out hole 2071, the third hollowed-out hole 2041, and the fourth hollowed-out hole 2051 are corresponding and in communication, so as to form a second through hole 202. The second hollowed-out hole 2032, the seventh hollowed-out hole 2072, and the fifth hollowed-out hole 2052 are corresponding and in communication, so as to expose a region that is of the dust filter 204 and used to form the dustproof sheet 2012 and implement a dustproof role of the dust filter 204.

In some embodiments, to save z-directional space that occupies the sound chamber structure 50, in the sealing dustproof member 201, a dust filter 204 may not be disposed in a region of the base sheet 2011, but a dust filter 204 is disposed only in a region of the dustproof sheet 2012. In this way, a thickness of the dust filter 204 is reduced in the z-directional space, so that the z-directional thickness of the sound chamber structure 50 can be reduced, and the z-directional thickness of the electronic device can be further reduced.

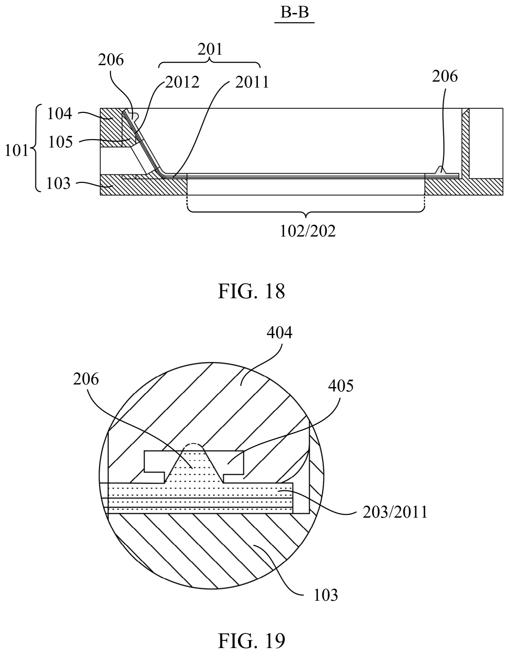

FIG. 18 is a second local schematic diagram of a cross section B-B in FIG. 6. FIG. 18 only shows structures of the middle frame 101 and the sealing dustproof member 201.

As shown in FIG. 18, in some embodiments, when the sealing dustproof member 201 is installed on the middle frame 101, the base sheet 2011 is attached to the middle plate 103, and the dustproof sheet 2012 is attached to the sound guide sidewall 105. A center of the base sheet 2011 includes a second through hole 202. For example, an edge that is of the base sheet 2011 and used to form the second through hole 202 may be flush with an edge that is of the middle plate 103 and used to form a first through hole 102, so as to subsequently form an equivalent sound chamber of a preset volume. The equivalent sound chamber of the preset volume may meet a sound production condition of the speaker 401, so as to ensure audio performance.

With reference to FIG. 11 again, when the speaker 401 is installed, a first opening edge 4041 of the housing 404 is attached to the base sheet 2011, and a second opening edge 4042 of the housing 404 is attached to the dustproof sheet 2012. In this way, the speaker 401 is sealed with and attached to the middle frame 101 by using the sealing dustproof member 201, and encloses an equivalent sound chamber with the screen assembly 301. The dustproof sheet 2012 is in communication with the equivalent sound chamber by using the dust filter 204, so that sound generated when a kernel 403 of the speaker 401 works can be successively guided from the sound guide hole 106 and the sound output hole 107. In addition, the dust filter 204 is used to prevent external dust from entering into the sound chamber structure 50.

Referring to FIG. 4 and FIG. 15 again, the open end edge of the housing 404 of the speaker 401 includes an annular wire slot 405, and the annular wire slot 405 is continuously formed on an edge that is of the housing 404 and used to form the open chamber 402.

A surface of the substrate 203 includes a first sealing rib 206, and the first sealing rib 206 is continuously formed in a region of adjacent edges of the base sheet 2011 and the dustproof sheet 2012. The first sealing rib 206 is an annular structure, and may implement annular sealing. The first sealing rib 206 may use a material that has characteristics of elasticity, deformability, and the like, for example, may be rubber.

When the speaker 401 is attached to the sealing dustproof member 201, the speaker 401 may be first fastened to the middle frame 101 by using screws, so as to stably fasten the speaker 401. In addition, the first sealing rib 206 is embedded into the annular wire slot 405, so as to abut against the open end edge of the housing 404. In this way, both the sound guide hole 106 and the open chamber 402 are effectively sealed with the middle frame 101, so as to avoid external liquid from entering into the open chamber 402 from the sound guide hole 106 and then leaking to a region of the circuit board.

FIG. 19 is an enlarged view of a region D in FIG. 11.

As shown in FIG. 19, in some embodiments, the first sealing rib 206 is in interference fit with the housing 404, and a deformable characteristic of the first sealing rib 206 is used, so that the first sealing rib 206 can be deformed based on a structure of the annular wire slot 405, so as to be tightly combined with the annular wire slot 405, thereby improving a sealing effect.

The first sealing rib 206 protrudes from a corresponding contact surface relative to the annular wire slot 405. Refer to a dotted line part at the sealing rib 206 in FIG. 18. In this way, when the speaker 401 is attached to the sealing dustproof member 201, the first sealing rib 206 is embedded into the annular wire slot 405 and abuts against the housing 404, and the first sealing rib 206 is pressed flat by the housing 404 by using elasticity of the first sealing rib 206, and is elastically deformed to exert a pressure on the housing 404, so as to improve a sealing effect of a contact surface between the speaker 401 and the sealing dustproof member 201.

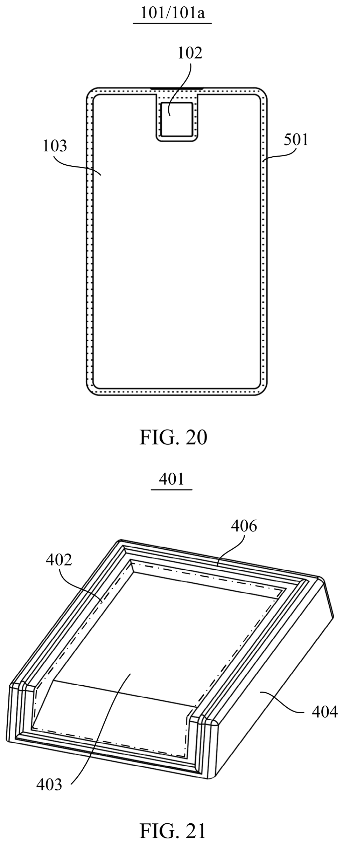

FIG. 20 is a third schematic structural diagram of a middle frame 101 according to an embodiment of this application. FIG. 20 is a schematic structural diagram of a first surface 101a of a middle frame 101.

With reference to FIG. 11 and FIG. 20, in some embodiments, the sound chamber structure 50 may further include a second adhesive layer 501. The second adhesive layer 501 continuously covers a peripheral edge of the first surface 101a and an edge of the first through hole 102. In this way, annular sealing may be performed on the edge and an opening position of the middle frame 101 by using the second adhesive layer 501, so as to improve a sealing effect.

The screen assembly 301 is attached to the first surface 101a by using the second adhesive layer 501, so that a binding force between the screen assembly 301 and the middle frame 101 can be increased. In addition, a sealing effect of the screen assembly 301 on one end of the first through hole 102 facing the first surface 101a can be further improved. In this way, when the speaker 401 is subsequently combined, an equivalent sound chamber with a good sealing effect can be obtained, and then the audio performance can be improved.

FIG. 21 is a second schematic structural diagram of a speaker 401 according to an embodiment of this application.

As shown in FIG. 21, in some embodiments, the speaker 401 may further include a second sealing rib 406, and the second sealing rib 406 is continuously formed on an open end edge of the housing 404. The second sealing rib 406 is an annular structure, and may implement annular sealing. For example, the second sealing rib 406 may be formed by using a glue drawing process.

In the speaker 401, an annular wire slot 405 (shown in FIG. 4) may be cancelled on the open end edge of the housing 404, or an annular wire slot 405 may be reserved, and a second sealing rib 406 is disposed in the annular wire slot 405.

The second sealing rib 406 and the first sealing rib 206 are the same in materials and characteristics, and both may be subject to an external force to be elastically deformed.

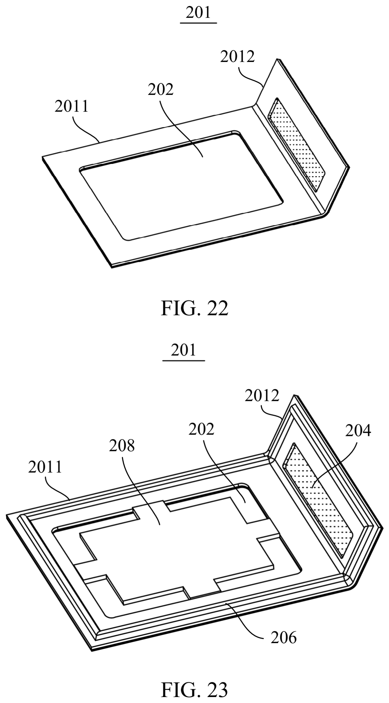

FIG. 22 is a second schematic structural diagram of a sealing dustproof member 201 according to an embodiment of this application.

As shown in FIG. 22, in some embodiments, to adapt to a structure of the speaker 401 shown in FIG. 21, a first sealing rib 206 is canceled on a surface of the substrate 203 of the sealing dustproof member 201 to form a plane. Alternatively, a second annular wire slot (not shown in the figure) may be disposed on a surface of the substrate 203, and a structure of the second annular wire slot may be the same as that of the annular wire slot 405.

A material of the substrate 203 in the sealing dustproof member 201 may be a hard material, such as a glass fiber board, a steel sheet, or a plastic support. In this way, specific hardness may be provided for the sealing dustproof member 201, so as to receive a pressure applied by the second sealing rib 406.

When the speaker 401 is attached to the sealing dustproof member 201, the speaker 401 may abut against the planar substrate 203 by using the second sealing rib 406, or the second sealing rib 406 is embedded into the second annular wire slot on the substrate 203, so as to abut against the substrate 203. In this way, a sealing effect between the speaker 401 and the sealing dustproof member 201 can be improved.

It should be noted that for a manner and an effect of implementing sealing between the speaker 401 and the substrate 203 by using the second sealing rib 406, refer to content shown in FIG. 19. Details are not described herein again.

FIG. 23 is a third schematic structural diagram of a sealing dustproof member 201 according to an embodiment of this application.

As shown in FIG. 23, in some embodiments, because the sealing dustproof member 201 shown in FIG. 15 is a soft adhesive material as a skeleton, the sealing dustproof member 201 is softer in hardness, and is easily bent and deformed during installation. To increase the hardness of the sealing dustproof member 201, the sealing dustproof member 201 may further include a support 208.

The support 208 is located in the second through hole 202, and is configured to support the sealing dustproof member 201. The support 208 may use a polycarbonate (Polycarbonate, PC) plastic material or a material that has specific hardness.

For example, the support 208 may be connected to the substrate 203, and after the substrate 203 is molded, the support 208 is injected and molded into the second through hole 202.

The support 208 may facilitate a process of installing the sealing dustproof member 201 to the middle frame 101, and does not belong to an original structure of the sealing dustproof member 201. Therefore, the support 208 needs to be removed after the sealing dustproof member 201 is attached to the second surface 101b. A removing process may be performed in laser removing and other manners.

For the sealing dustproof member 201 shown in FIG. 22, because the substrate 203 thereof may use a hard material, the sealing dustproof member 201 has specific hardness. Therefore, in the sealing dustproof member 201 shown in FIG. 22, the substrate 203 of the sealing dustproof member 201 may not be provided with the support 208 for auxiliary support.

In some embodiments, in the sound chamber structure 50 shown in the foregoing embodiments, the open chamber 402 of the speaker 401 is located in the front chamber and faces the screen assembly 301, so as to form sealing by using the screen assembly 301. If the open chamber 402 is located in the rear chamber, that is, the rear housing facing the electronic device 100, the rear housing of the electronic device 100 may be used to form the sealing. If the open chamber 402 faces a battery cover, the battery cover may be used to form the sealing.

It should be noted that for a solution in which the sealing is formed by using the rear housing or by using the battery cover, reference may be made to a solution in which the sealing is formed by using the screen assembly 301. Details are not described herein again.

According to the sound chamber structure 50 provided in the embodiments of this application, the speaker 401 having the open chamber 402 is used, which can reduce a thickness of the speaker 401, and further reduce space that occupies a thickness direction of the sound chamber structure 50. The speaker 401 is attached to the sealing dustproof member 201, so that a sealing effect can be improved, so as to achieve waterproof sealing of an IPX8 level, thereby avoiding external water from entering from the sound outlet hole 107 and leaking to a compartment of the circuit board. In addition, the screen assembly 301 is sealed with and attached to the middle frame 101 by using the second adhesive layer 501, and an equivalent sound chamber of the speaker 401 may be enclosed by the screen assembly 301, the first through hole 102, the second through hole 202, and the open chamber 402. In this way, in a case that the thickness of the electronic device 100 is smaller, a volume of the equivalent sound chamber may meet a volume requirement required by the speaker 401 to sound, so as to ensure audio performance. In addition, because of a good sealing effect, a sealing width can be ensured at two ends of the sound guide hole 106, and a width of a sound outlet channel can be expanded, so as to further improve audio performance of the speaker 401. It can be learned that the sound chamber structure 50 may implement thinning and light-weighting of the electronic device, further may improve the sealing effect to perform effective waterproofing, and also can ensure audio performance of the electronic device.

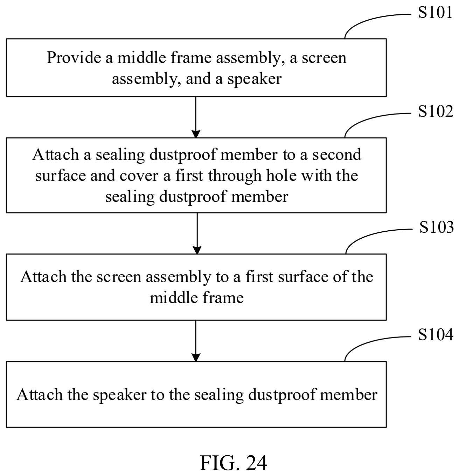

FIG. 24 is a flowchart of a fabrication method of a sound chamber structure according to an embodiment of this application.

As shown in FIG. 24, in some embodiments, a fabrication method of the sound chamber structure is used to fabricate the sound chamber structure 50 according to any one of the foregoing embodiments. The method may include step S101 to step S104.

Step S101: Provide a middle frame assembly, a screen assembly, and a speaker.

The middle frame assembly includes a middle frame 101 and a sealing dustproof member 201, and the middle frame 101 includes a first surface 101a, a second surface 101b, and a first through hole 102 in communication with the first surface 101a and the second surface 101b. The first surface 101a and the second surface 101b are opposite surfaces.

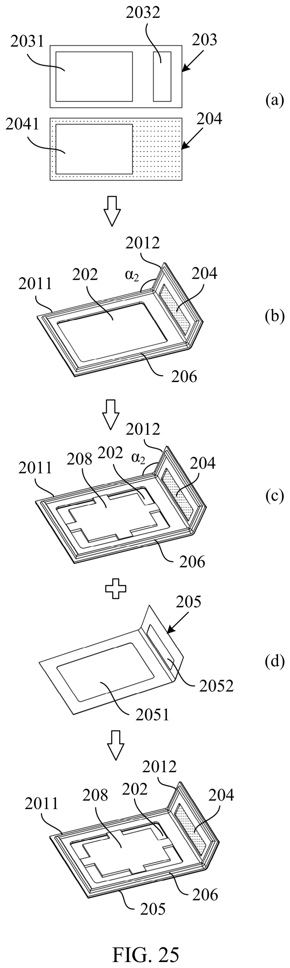

FIG. 25 is a schematic diagram of a technological process for fabricating a sealing dustproof member according to an embodiment of this application.

In some embodiments, fabricating the sealing dustproof member includes the following steps 201 to 204:
Step 201: As shown in (a) in FIG. 25, provide a substrate 203 and a dust filter 204. A first hollowed-out hole 2031 and a second hollowed-out hole 2032 are machined on the substrate 203. A third hollowed-out hole 2041 is machined on the dust filter 204.
Step 202: As shown in (b) in FIG. 25, integrally mold the substrate 203 and the dust filter 204, and inject a first sealing rib 206 on a surface of the substrate 203 to obtain an assembly, so as to save Z-directional stacked space. In addition, an external force is applied in a preset region of the assembly, so that the assembly is deformed.

The preset region may be a region between the first hollowed-out hole 2031 and the second hollowed-out hole 2032, so that the deformed assembly includes a base sheet 2011 and a dustproof sheet 2012, and a second angle α₂exists between the base sheet 2011 and the dustproof sheet 2012.

Step 203: As shown in (c) in FIG. 25, inject a support 208 into a second through hole 101, where the support 208 may be fastened to the substrate 203, so as to support the sealing dustproof member 201.

It should be noted that the support 208 is an auxiliary structure, and may be selected based on an actual assembling effect. Therefore, step 203 may not be performed.

Step 204: As shown in (d) in FIG. 25, attach a first adhesive layer 205 to a surface of the dust filter 204 away from the substrate 203, so as to obtain the sealing dustproof member 201.

In some embodiments, if the z-directional stack space is sufficient and high machining costs are avoided, the substrate 203 and the dust filter 204 may not be molded integrally, but the substrate 203 and the dust filter 204 are formed (as shown in FIG. 17) by using the third adhesive layer 207 (a back adhesive or another bonding manner).

Step S102: Attach the sealing dustproof member 201 to a second surface 101 and cover a first through hole 102 with the sealing dustproof member.

The sealing dustproof member 201 includes a second through hole 202, and the second through hole 202 is in communication with the first through hole 102.

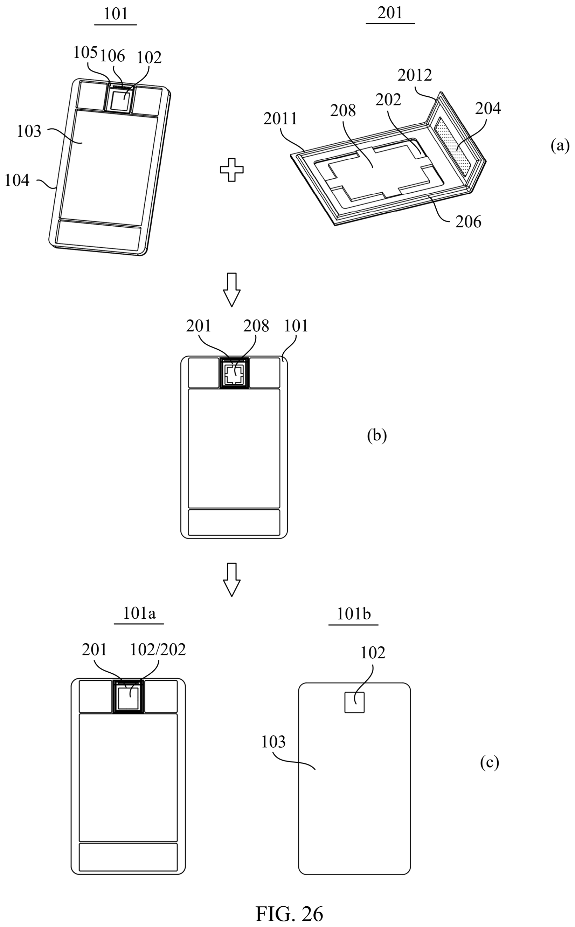

FIG. 26 is a schematic diagram of a technological process for fabricating a middle frame assembly according to an embodiment of this application.

With reference to FIG. 11 and (a) in FIG. 26, in some embodiments, a middle frame 101 and a sealing dustproof member 201 are provided. A sound guide sidewall 105 is machined on the side frame 104 of the middle frame 101. The sound guide sidewall 105 is connected to the middle plate 103 of the middle frame 101 based on the first angle α₁, where the first angle α₁is equal to a second angle α₂. In a stacked structure of the side frame 104 and the sound guide sidewall 105, a plurality of sound guide holes 106 that run through the side frame 104 and the sound guide sidewall 105 are machined.

With reference to FIG. 11 and (b) in FIG. 26, the sealing dustproof member 201 is attached to the second surface 101b of the middle frame 101 by using the first adhesive layer 205, and the first through hole 102 is covered. The base sheet 2011 is attached to the middle plate 103, the dustproof sheet 2012 is attached to the sound guide sidewall 105, and the second through hole 202 is in communication with and in edge alignment with the first through hole 102.

As shown in (c) in FIG. 26, the support 208 in the sealing dustproof member 201 is removed in a laser removal manner, to obtain a middle frame assembly. (c) in FIG. 26 shows a structure of the first surface 101a of the middle frame assembly and a structure of the second surface 101b.

Step S103: Attach the screen assembly 301 to the first surface 101a of the middle frame 101.

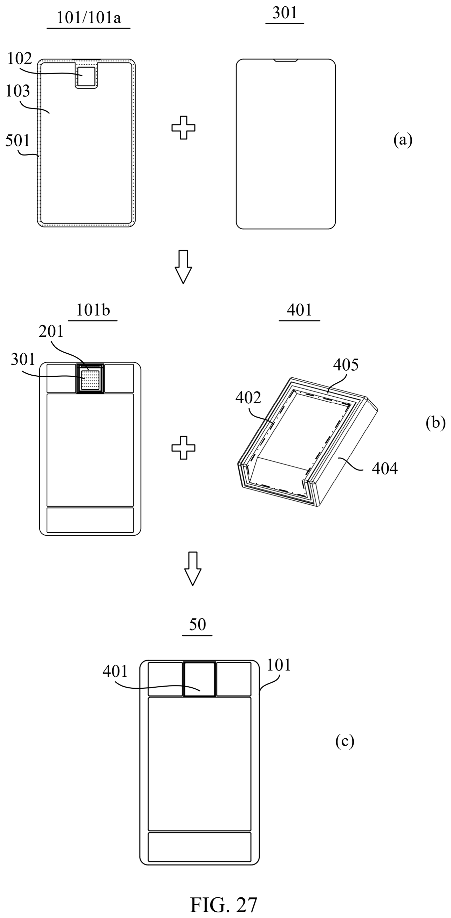

FIG. 27 is a schematic diagram of a first technological process for fabricating a sound chamber structure 50 according to an embodiment of this application.

As shown in (a) in FIG. 27, in some embodiments, a second adhesive layer 501 is coated on a peripheral edge of the first surface 101a and an edge of the first through hole 102. The screen assembly 301 is attached to the first surface 101a of the middle frame 101 by using the second adhesive layer 501, so as to obtain a front housing assembly.

In this way, on the first surface 101a, annular sealing is completed at an opening position of the middle frame 101 by using a back adhesive or another sealing glue, and is subsequently sealed with the screen assembly 301.

Step S104: Attach the speaker 401 to the sealing dustproof member 201.

As shown in (b) in FIG. 27, in some embodiments, the speaker 401 includes an open chamber 402 facing the first through hole 102, and an annular wire slot 405 is machined on an open end edge of the housing 404 of the speaker 401.

With reference to FIG. 19 and (c) in FIG. 27, in some embodiments, the speaker 401 is assembled with the front housing assembly. The speaker 401 is buckled onto the sealing dustproof member 201, and is fastened to the second surface 101b of the middle frame 101, and the first sealing rib 206 is embedded into the annular wire slot 405, so that the open end edge of the housing 404 of the speaker 401 abuts against the first sealing rib 206 to implement sealing.

In this way, the open chamber 402, the second through hole 202, the first through hole 102, and the screen assembly 301 enclose an equivalent sound chamber of the speaker 401. The sound guide hole 106 is in communication with the equivalent sound chamber.

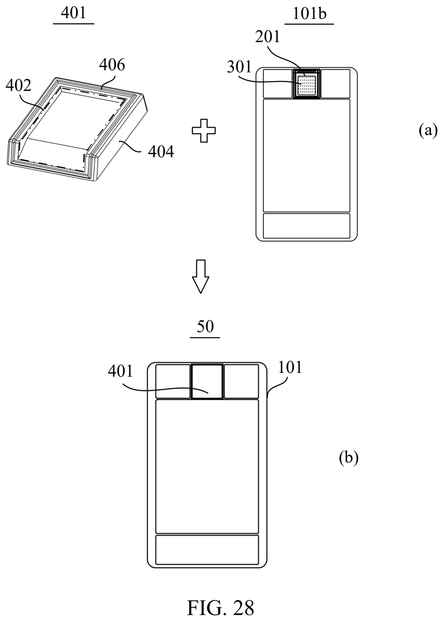

FIG. 28 is a schematic diagram of a second technological process for fabricating a sound chamber structure 50 according to an embodiment of this application.

As shown in (a) in FIG. 28, in some embodiments, a second sealing rib 406 is injected at an open end edge of a housing 404 of a speaker 401. In this scenario, a surface of a substrate 203 of the sealing dustproof member 201 may be a plane, or may include a second annular wire slot.

With reference to (b) in FIG. 28, in some embodiments, the speaker 401 is assembled with a front housing assembly. The speaker 401 is buckled onto the sealing dustproof member 201, is fastened to a second surface 101b of a middle frame 101, and the substrate 203 abuts against the second sealing rib 406 to implement sealing.

In this way, the open chamber 402, the second through hole 202, the first through hole 102, and the screen assembly 301 enclose an equivalent sound chamber of the speaker 401.

According to the fabrication method of the sound chamber structure 50 provided in the embodiment of this application, a screen assembly 301 is attached to a middle frame assembly, and a front housing assembly may be formed, so as to implement sealing between the middle frame 101 and the screen assembly 301. Then, the speaker 401 having the open chamber is attached to the middle frame assembly, and sealing between the speaker 401 and the middle frame 101 is implemented by using the sealing dustproof member 201. It can be learned that the sound chamber structure 50 may form the equivalent sound chamber, and provide a working chamber of a same volume for the speaker 401. In this way, the sound chamber structure may be effectively sealed to achieve waterproof sealing of an IPX8 level, so that the electronic device can be effectively waterproof, and audio performance of the speaker 401 can be further ensured.

It should be noted that in the fabrication method of the sound chamber structure provided in the embodiment of this application, content descriptions such as a structural characteristic and a beneficial effect that are of the sound chamber structure 50 are relatively brief. For corresponding content, reference may be made to content in the sound chamber structure embodiment, and details are not described herein again.

The embodiments of this application further provide an electronic device. The electronic device includes a rear housing and a sound chamber structure 50 provided in any one of the foregoing embodiments. The rear housing is buckled onto the second surface 101b of the middle frame 101 to form a closed chamber with the sound chamber structure 50. In this way, the sound chamber structure 50 has a smaller thickness, has a good sealing effect and audio performance, and may implement thinning and light-weighting of the electronic device, so that the electronic device can be effectively waterproof, and audio performance of the electronic device can be further ensured.

It should be noted that a person skilled in the art may easily think of another implementation solution of this application after considering the specification and practicing the application disclosed herein. This application is intended to cover any variations, functions, or adaptive changes of this application. These variations, functions, or adaptive changes comply with general principles of this application, and include common knowledge or a commonly used technical means in the art that is not disclosed in this application. This specification and the embodiments are merely considered as examples, and the actual scope of this application is pointed out by the following claims.

It should be understood that this application is not limited to the precise structures described above and shown in the accompanying drawings, and various modifications and changes may be made without departing from the scope thereof. The scope of this application is limited only by the appended claims.

## Claims

1. A sound chamber structure, comprising:
a middle frame assembly, comprising a middle frame (101) and a sealing dustproof member (201); wherein the middle frame (101) comprises a first surface (101a), a second surface (101b), and a first through hole (102) in communication with the first surface (101a) and the second surface (101b); the first surface (101a) and the second surface (101b) are opposite surfaces; and the sealing dustproof member (201) is attached to the second surface (101b) and covers the first through hole (102), the sealing dustproof member (201) comprises a second through hole (202), and the second through hole (202) is in communication with the first through hole (102); and
a screen assembly (301) and a speaker (401), wherein the screen assembly (301) is attached to the first surface (101a), and the speaker (401) is attached to the sealing dustproof member (201); and the speaker (401) comprises an open chamber (402) facing the first through hole (102), and the open chamber (402), the second through hole (202), the first through hole (102), and the screen assembly (301) enclose an equivalent sound chamber of the speaker (401).

2. The sound chamber structure according to claim 1, wherein
the middle frame (101) comprises a middle plate (103) and a side frame (104) enclosing an edge of the middle plate (103), and the first through hole (102) is disposed on the middle plate (103);
one side of the side frame (104) facing the first through hole (102) comprises a sound guide sidewall (105), and the sound guide sidewall (105) is connected to the middle plate (103) based on a first angle; and
the middle frame (101) further comprises a plurality of sound guide holes (106) that run through the side frame (104) and the sound guide sidewall (105), and the sound guide holes (106) are in communication with the equivalent sound chamber.

3. The sound chamber structure according to claim 2, wherein
the sealing dustproof member (201) comprises a base sheet (2011) and a dustproof sheet (2012), and the base sheet (2011) and the dustproof sheet (2012) are connected based on a second angle; wherein the second angle is equal to the first angle;
the base sheet (2011) is attached to the middle plate (103), and the dustproof sheet (2012) is attached to the sound guide sidewall (105); and
a center of the base sheet (2011) comprises the second through hole (202).

4. The sound chamber structure according to claim 3, wherein
the sealing dustproof member (201) comprises a substrate (203), a dust filter (204), and a first adhesive layer (205) that are successively stacked;
a region that is of the substrate (203) and used to form the base sheet (2011) comprises a first hollowed-out hole (2031), and a region that is of the substrate (203) and used to form the dustproof sheet (2012) comprises a second hollowed-out hole (2032);
a region that is of the dust filter (204) and used to form the base sheet (2011) comprises a third hollowed-out hole (2041);
a region that is of the first adhesive layer (205) and used to form the base sheet (2011) comprises a fourth hollowed-out hole (2051), and a region that is of the first adhesive layer (205) and used to form the dustproof sheet (2012) comprises a fifth hollowed-out hole (2052); and
the first hollowed-out hole (2031), the third hollowed-out hole (2041), and the fourth hollowed-out hole (2051) are in communication, to form the second through hole (202); and the second hollowed-out hole (2032) and the fifth hollowed-out hole (2052) are in communication, so as to expose a region that is of the dust filter (204) and used to form the dustproof sheet (2012).

5. The sound chamber structure according to claim 4, wherein
the speaker (401) comprises a kernel (403) and a housing (404) that forms openings on two adjacent side surfaces; and
the kernel (403) is located in the housing (404), and has a first distance L1 from an open end edge of the housing (404), so as to enclose the open chamber (402).

6. The sound chamber structure according to claim 5, wherein
the open end edge of the housing (404) comprises an annular wire slot (405);
a surface of the substrate (203) comprises a first sealing rib (206), and the first sealing rib (206) is continuously formed in a region of adjacent edges of the base sheet (2011) and the dustproof sheet (2012); and
the first sealing rib (206) is configured to be embedded into the annular wire slot (405) to abut against the open end edge of the housing (404).

7. The sound chamber structure according to claim 1,
further comprising a second adhesive layer (501); wherein
the second adhesive layer (501) continuously covers a peripheral edge of the first surface (101a) and an edge of the first through hole (102); and
the second adhesive layer (501) is configured to implement attachment between the screen assembly (301) and the first surface (101a), and is configured to seal one end of the first through hole (102) facing the first surface (101a).

8. The sound chamber structure according to claim 5, wherein
the sealing dustproof member (201) further comprises a third adhesive layer (207);
the third adhesive layer (207) is located between the substrate (203) and the dust filter (204);
a region that is of the third adhesive layer (207) and used to form the base sheet (2011) comprises a sixth hollowed-out hole (2071), and a region that is of the third adhesive layer (207) and used to form the dustproof sheet (2012) comprises a seventh hollowed-out hole (2072); and
the sixth hollowed-out hole (2071) is configured to form the second through hole (202), and the seventh hollowed-out hole (2072) is configured to expose the region that is of the dust filter (204) and used to form the dustproof sheet (2012).

9. The sound chamber structure according to claim 8, wherein
the speaker (401) further comprises a second sealing rib (406), and the second sealing rib (406) is continuously formed on the open end edge of the housing (404); and
the second sealing rib (406) is configured to abut against the substrate (203).

10. The sound chamber structure according to claim 1, wherein
the sealing dustproof member (201) further comprises a support (208);
the support (208) is located in the second through hole (202), and is configured to support the sealing dustproof member (201); and
the support (208) is configured to be removed after the sealing dustproof member (201) is attached to the second surface (101b).

11. A fabrication method of a sound chamber structure, used to fabricate the sound chamber structure according to any one of claims 1-10, wherein the method comprises:
providing a middle frame assembly, a screen assembly, and a speaker, wherein the middle frame assembly comprises a middle frame and a sealing dustproof member, the middle frame comprises a first surface, a second surface, and a first through hole in communication with the first surface and the second surface, and the first surface and the second surface are opposite surfaces;
attaching the sealing dustproof member to the second surface and covering the first through hole with the sealing dustproof member, wherein the sealing dustproof member comprises a second through hole, and the second through hole is in communication with the first through hole;
attaching the screen assembly to the first surface of the middle frame; and
attaching the speaker to the sealing dustproof member; wherein the speaker comprises an open chamber facing the first through hole, and the open chamber, the second through hole, the first through hole, and the screen assembly enclose an equivalent sound chamber of the speaker.

12. The method according to claim 11, further comprising:
machining a sound guide sidewall on a side frame of the middle frame; wherein the sound guide sidewall is connected to a middle plate of the middle frame based on a first angle; and
machining, in a stacked structure of the side frame and the sound guide sidewall, a plurality of sound guide holes that run through the side frame and the sound guide sidewall, wherein the sound guide holes are in communication with the equivalent sound chamber.

13. The method according to claim 12, wherein fabricating the sealing dustproof member comprises the following steps:
providing a substrate, a dust filter and a first adhesive layer;
integrally molding the substrate and the dust filter to obtain an assembly;
applying an external force in a preset region of the assembly, so that the assembly is deformed; and
attaching the first adhesive layer to a surface of the dust filter away from the substrate to obtain the sealing dustproof member; wherein the sealing dustproof member comprises a base sheet and a dustproof sheet, a second angle exists between the base sheet and the dustproof sheet, and the second angle is equal to the first angle.

14. The method according to claim 13, wherein the attaching the sealing dustproof member to the second surface and covering the first through hole with the sealing dustproof member comprises:
attaching the base sheet of the sealing dustproof member to the middle plate by using the first adhesive layer, and attaching the dustproof sheet of the sealing dustproof member to the sound guide sidewall.

15. The method according to claim 11, wherein the attaching the screen assembly to the first surface of the middle frame comprises:
coating a second adhesive layer on a peripheral edge of the first surface and an edge of the first through hole; and
attaching the screen assembly to the first surface of the middle frame by using the second adhesive layer.

16. The method according to claim 13, wherein the attaching the speaker to the sealing dustproof member comprises:
machining an annular wire slot on an open end edge of a housing of the speaker, and injecting a first sealing rib on a surface of the substrate, wherein the first sealing rib is continuously formed in a region of adjacent edges of the base sheet and the dustproof sheet; and
buckling the speaker on the sealing dustproof member, fastening the speaker to the second surface of the middle frame, and embedding the first sealing rib into the annular wire slot, so that the open end edge of the housing of the speaker abuts against the first sealing rib.

17. The method according to claim 13, wherein the fabricating the sealing dustproof member further comprises:
attaching a third adhesive layer between the substrate and the dust filter.

18. The method according to claim 13, wherein the attaching the speaker to the sealing dustproof member comprises:
injecting a second sealing rib at an open end edge of the housing of the speaker; and
buckling the speaker onto the sealing dustproof member, fastening the speaker to the second surface of the middle frame, and making the substrate abut against the second sealing rib.

19. The method according to claim 13, wherein the fabricating the sealing dustproof member further comprises:
injecting a support in the second through hole, wherein the support is configured to support the sealing dustproof member; and
after the attaching the sealing dustproof member to the second surface and covering the first through hole with the sealing dustproof member, the method further comprises:
removing the support in the sealing dustproof member.

20. An electronic device, comprising the sound chamber structure according to any one of claims 1-10.
